# FASCICULE DE BREVET EUROPEEN

(11) **EP 1 930 214 B1**
(45) Date de publication et mention de la délivrance du brevet: **12.01.2011**
(21) Numéro de dépôt: 07120243.6
(22) Date de dépôt: 08.11.2007
(51) Int. Cl.: B60R 11/02

(54) **Support de haut-parleur pour véhicule**
Lautsprecherhalterung für Kraftfahrzeug
Loudspeaker support for a vehicle

(30) Priorité: 09.11.2006 FR 0654800
(43) Date de publication de la demande: 11.06.2008
(73) Titulaire: Peugeot Citroën Automobiles SA, 78943 Vélizy-Villacoublay Cedex (FR)
(72) Inventeur: Accard, Jean Christophe, 92190, Meudon (FR)
(74) Mandataire: Vigand, Régis Louis Michel

(56) Documents cités:
- EP-A2- 0 510 345
- DE-A1- 19 649 140
- DE-A1- 19 738 853
- FR-A1- 2 726 796

## Description

La présente invention concerne un support de haut-parleur pour véhicule.

Il est courant d'encastrer des haut-parleurs dans la carrosserie des véhicules, en particulier dans les portières des véhicules automobiles.

Les haut-parleurs d'un véhicule sont installés à l'intérieur de supports fixés aux parties de carrosserie, en particulier aux caissons des portières.

Un support ou réceptacle de haut-parleur à encastrer est, en général, monolithique avec un panneau de garnissage d'étanchéité. Une garniture recouvre le panneau d'étanchéité devant la tôle qui délimite le caisson de la portière. Le panneau d'étanchéité est, de préférence, un panneau composite comprenant une feuille en mousse de polymère et un film polymère étanche à l'eau.

On connaît déjà, selon la demande de brevet d'invention français n° 2 726 796, un réceptacle de haut-parleur pour garnissage d'étanchéité dans la portière d'un véhicule, qui comporte une ouverture avant par laquelle est introduit un haut-parleur, et un fond ajouré. Ce réceptacle présente aussi une surface sensiblement tronconique entre une grande base dans laquelle est ménagée l'ouverture avant et une petite base formant le fond ajouré. Cette petite base présente un profil transversal sensiblement en denture, de préférence dissymétrique et sensiblement triangulaire, ayant des dents avec des premiers flancs dans lesquels sont pratiquées des lumières formant évents, et des seconds flancs formant des déflecteurs de gouttelette. Les lumières améliorent l'acoustique du réceptacle et les déflecteurs protègent le haut-parleur contre toute pénétration de gouttelette tombant de la vitre de la portière dans le caisson de la portière où est logé le réceptacle. Un tel réceptacle offre l'avantage de pouvoir être réalisé par thermoformage et d'être empilable. On connait également, selon la demande de brevet d'invention EP-A2-0510345 un support de haut-parleurs correspondant au preambule de la revendication 1.

Le but de la présente invention est de fournir un nouveau réceptacle ou support de haut-parleur qui puisse mieux répondre aux normes de protection et de sécurité en cas de chocs que les supports ou réceptacles de l'art antérieur, en particulier qui puisse mieux répondre aux tests de sécurité passive connus des véhicules automobiles comme, par exemple, les tests de « l'European New Car Assessment Program » (EuroNCAP).

On sait combien les résultats de ces tests lorsqu'ils sont bons peuvent conforter l'image du constructeur automobile en matière d'innovations technologiques, et de sécurité, par conséquent contribuer au succès d'un modèle automobile.

Un autre but de la présente invention est de fournir un tel support de haut-parleur, qui assure également une bonne tenue à l'étanchéité.

C'est aussi un but de la présente invention de fournir un tel support de haut-parleur qui, en plus de bien répondre aux normes de sécurité en cas de chocs et de garantir une bonne étanchéité, puisse permettre la fixation de haut-parleurs de diamètres différents (support multifonction).

Pour parvenir à ces buts, la présente invention conçoit un nouveau support de haut-parleur de véhicule tel que décrit dans la revendication 1.

Selon un mode préféré de réalisation de l'invention, les deux parties de l'enveloppe sont sensiblement cylindriques, coaxiales, la partie située près du fond étant de diamètre légèrement inférieur à la partie située près de l'ouverture avant.

Selon un mode préféré de réalisation de l'invention également, la zone de rupture qui relie les deux parties de l'enveloppe est sensiblement dans un plan radial du support, et de faible épaisseur pour garantir la rupture en cas de choc.

De préférence, la zone de rupture présente des nervures radiales reliant les deux parties de l'enveloppe, pour garantir la rigidité du support en l'absence de choc.

De manière préfèrentielle, les nervures sont réparties de manière régulière sur la périphérie de la zone de rupture.

De préférence également, des nervures de compression sont prévues sur le support, de façon à mettre en compression une feuille d'étanchéité appliquée sur le support en créant des bourrelets qui empêchent le passage d'eau et de poussières.

Selon un mode préféré de réalisation du support en support « multifonction », il est prévu un épaulement intermédiaire de l'enveloppe, situé entre l'ouverture avant et la zone de rupture, de façon à permettre la fixation d'un haut-parleur de diamètre différent.

A titre d'exemple non limitatif de l'objet de l'invention, ledit épaulement peut permettre la fixation d'un haut-parleur de diamètre 130 mm, tandis que l'ouverture avant permet la fixation d'un haut-parleur de diamètre 165 mm.

La zone de rupture présente, de préférence, une épaisseur d'environ 0,5 mm.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective avant d'un support selon la présente invention,
- la figure 2 est une vue en perspective arrière du support de la figure 1,
- la figure 3 est une vue de face du support de la présente invention des figures 1 et 2,
- la figure 4 est une vue latérale gauche du support de la présente invention, selon la flèche F de la figure 3,
- la figure 5 est une vue latérale droite du support de la présente invention, selon la flèche G de la figure 3,
- la figure 6 est une demie vue en coupe du support de la présente invention, selon la ligne VI - VI de la figure 5,
- la figure 7 est une vue en coupe agrandie d'une zone détaillée désignée VII sur la figure 6,
- la figure 8 est une vue en coupe agrandie d'une zone détaillée désignée VIII sur la figure 6, et
- la figure 9 est une vue en perspective partielle du support de la présente invention, selon une variante de réalisation.

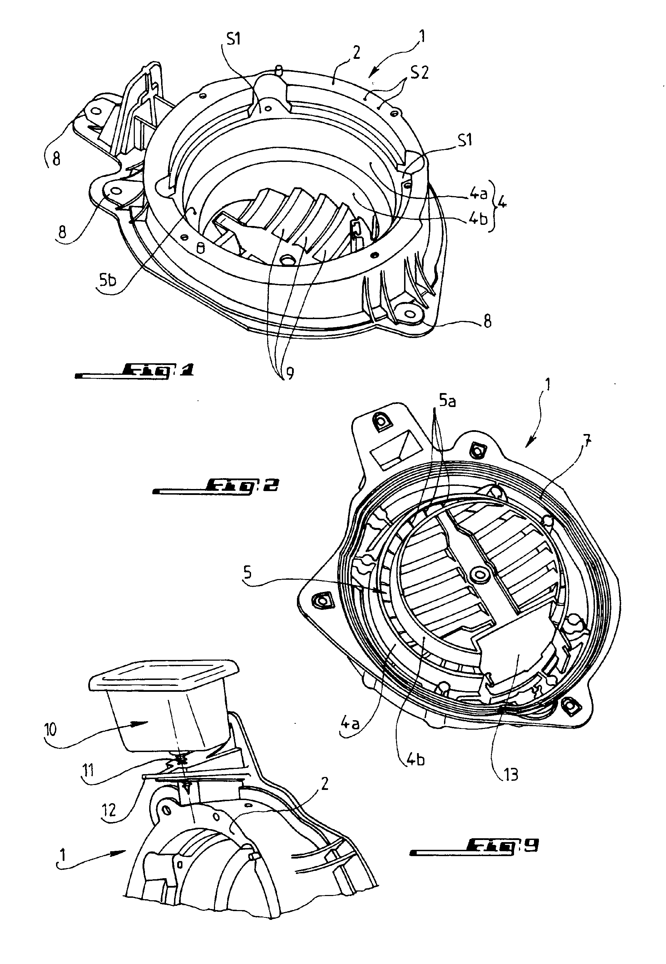

En référence aux dessins des figures 1 à 6, un support 1 de haut-parleur de véhicule automobile a une forme de révolution autour d'un axe sensiblement horizontal désigné X, perpendiculaire à la tôle intérieure du véhicule. Cette tôle intérieure peut être, par exemple, un caisson de portière non représenté, auquel est fixé directement ou indirectement le support 1.

Le support 1 présente une ouverture avant 2, circulaire, un fond ajouré 3, et une enveloppe 4, qui relie l'ouverture 2 au fond ajouré 3.

L'ouverture avant 2 se trouve dans le plan d'une plaque au contour irrégulier, comportant notamment plusieurs ailettes 8 destinées à recevoir, en particulier, des orifices pour le passage de moyens de fixation du support 1 sur le caisson de portière.

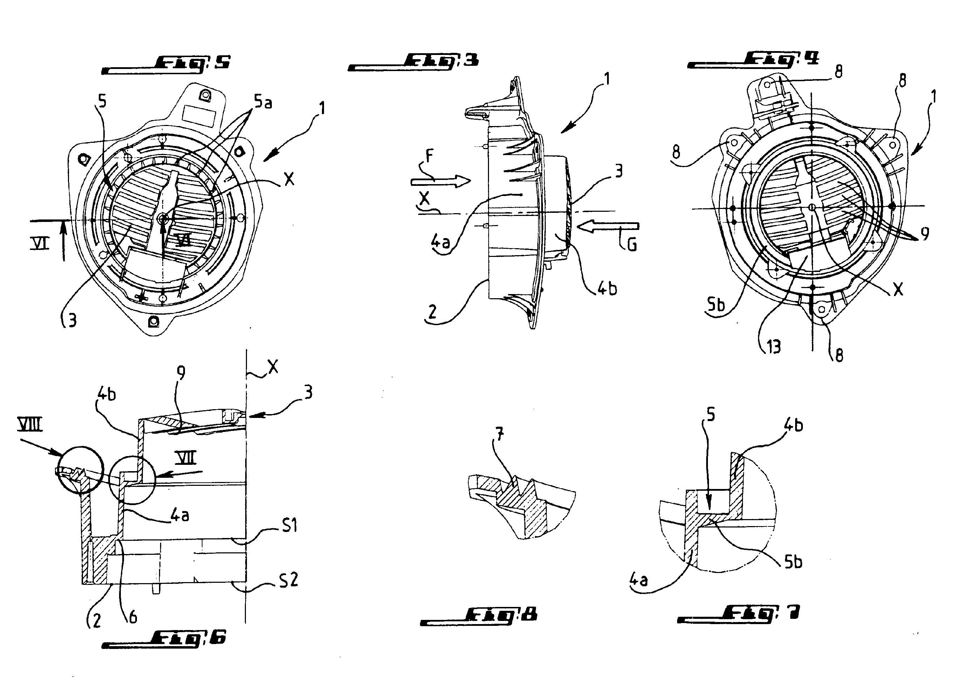

L'enveloppe 4 présente une surface de révolution, et est formée de deux parties adjacentes selon l'axe longitudinal X, référencées 4a et 4b (figure 6, en particulier).

Les deux parties 4a et 4b de l'enveloppe 4 sont sensiblement cylindriques ou très légèrement tronconiques, de diamètres différents, et reliées entre elles par une zone annulaire, dite zone de rupture 5.

La zone de rupture 5 est une zone de faible résistance mécanique, de façon à permettre la cassure de l'enveloppe 4 de manière télescopique selon l'axe longitudinal X, c'est-à-dire par pénétration de la partie 4b à l'intérieur de la partie 4a. Comme on peut mieux le voir sur les dessins des figures 1, 2, 5 et 7, la zone de rupture est une zone de configuration « mixte » avec alternance de nervures 5a et de zones « fermées » 5b dont l'épaisseur est de l'ordre de 0,5 mm afin de garantir la rupture lors d'un choc.

La zone de rupture 5 est étanche malgré sa faible résistance mécanique souhaitée pour permettre la « casse » télescopique du support 1.

Ainsi, le support 1 de haut-parleur est conçu avec la propriété d'être « sécable », afin de répondre aux normes de protection et de sécurité actuelles et à venir des véhicules automobiles.

Selon les tests de l'EuroNCAP, par exemple, mentionnés précédemment, les véhicules testés subissent un choc frontal sur une barrière déformable à une vitesse donnée et des chocs latéraux sur différents obstacles (barrière déformable, poteau) à une vitesse également prédéterminée. La zone de rupture 5, au cours de ces tests, permet d'absorber au moins une partie de l'énergie du choc en se cassant. Le fait que le support 1 se casse de manière télescopique évite toute intrusion du support 1 ou d'une partie de celui-ci dans l'habitacle du véhicule. Par conséquent, le risque de blessure - en général dans la région du bassin - des passagers des places arrière par le support de haut-parleur encastré dans la portière est considérablement diminué. Il en résulte un résultat nettement meilleur des tests, par l'absence de ce risque d'intrusion d'une pièce encastrée dans la portière.

Dans le mode de réalisation décrit et représenté sur les figures, et donné à titre d'exemple non limitatif de l'objet de l'invention, la zone de rupture 5 présente une collerette mince 5b, annulaire, sensiblement dans le plan transversal à l'axe longitudinal X, reliant les deux parties 4a et 4b de l'enveloppe 4, et des nervures 5a radiales, réparties, de préférence de manière régulière sur toute la circonférence de la zone de rupture 5.

La dimension longitudinale (longueur selon l'axe X) de la partie 4b de l'enveloppe 4 est inférieure à celle de la partie 4a, de manière à permettre le mouvement « télescopique » maximal de la partie 4b à l'intérieur de la partie 4a lors d'un choc.

Comme mentionné précédemment, le fond 3 du support 1 est ajouré, de manière connue en soi, la forme des persiennes 9 (figures 1, 4 et 6) et des lumières du fond 3 permettant d'améliorer l'acoustique du support et de s'opposer aux pénétrations possibles de gouttelettes tombant de la vitre de la portière dans le caisson de la portière où est logé le support. Plus précisément, les persiennes 9 permettent d'assurer un bon rendement acoustique en ayant une partie perméable à l'air qui respecte les aires minimales requises pour un fonctionnement optimal du haut-parleur de plus grand diamètre adaptable sur le support 1.

Il est prévu également un évidement 13 à l'arrière du support, destiné au passage des liaisons électriques du haut-parleur, en particulier.

Le support 1 est configuré de manière à garantir au haut-parleur une bonne étanchéité à l'eau et à la poussière. L'étanchéité entre la garniture de portière et la tôle du caisson de portière est réalisée par la mise en place d'une feuille d'étanchéité (en polymère, par exemple). Le support 1 est fixé sur la feuille d'étanchéité. Afin de garantir une bonne étanchéité entre la feuille d'étanchéité et le support 1 de haut-parleur, il est prévu des nervures de compression 7 (voir figure 8), qui viennent mettre en compression la feuille d'étanchéité (non représentée) contre le support 1 afin de créer des bourrelets qui empêchent la passage d'eau et de poussières.

En plus des fonctions de sécurité et d'étanchéité, le support 1 selon la présente invention présente aussi une fonction d'adaptation lui permettant la fixation de deux haut-parleurs différents. Cette fonction supplémentaire est désignée « caractère multifonction » du support 1 de haut-parleur.

Dans le présent mode de réalisation de l'invention, la partie 4a de l'enveloppe 4 présente un épaulement interne qui définit une surface d'appui S1 annulaire pour un premier haut-parleur HP1 d'un premier diamètre D1 correspondant au diamètre dudit épaulement. La surface latérale - ou surface d'ouverture 2 - du support 1 constitue une surface d'appui S2 annulaire pour un second haut-parleur HP2 d'un second diamètre D2, plus grand que D1.

A titre d'illustration, on peut avoir deux haut-parleurs HP1 et HP2 de diamètres suivants :
- D1 = 130 mm, et
- D2 = 165 mm.

Dans le cas d'un véhicule prévu sans équipement radio, une mousse en matériau polymère, par exemple, bouche le support 1 à la place des haut-parleurs.

Sur le dessin de la figure 9, on a représenté en variante le support 1 selon la présente invention qui remplit, de plus, une fonction de support dit « support bénitier 10 ». A titre d'exemple, la liaison peut être réalisée par une vis 11 sur une patte de fixation 12 monobloc avec le support 1. Dans ce cas, le support 1 permet de relier la poignée de tirage de la portière à la structure de support.

Ainsi, comme il a été décrit ci-dessus, le support selon la présente invention présente les trois fonctions suivantes, en combinaison :
- le support est « sécable » sous l'effet d'un choc pour assurer une protection des passagers,
- le support est étanche pour protéger le haut-parleur de l'eau et de la poussière, et
- le support est « multifonction », pour permettre la fixation de deux diamètres différents de haut-parleurs.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Support de haut-parleur de véhicule destiné à être encastré dans un élément de carrosserie, tel qu'une portière, qui comprend une ouverture avant (2) par laquelle est introduit un haut-parleur, un fond ajouré (3), et une enveloppe (4) entre l'ouverture avant (2) et le fond (3), l'enveloppe (4) présentant une forme de révolution en deux parties (4a, 4b) selon l'axe longitudinal (X) du support (1), les deux parties (4a, 4b) de l'enveloppe (4) étant séparées par une zone de rupture (5) qui permet d'absorber une partie au moins d'un choc en cassant le support (1) de manière télescopique selon ledit axe longitudinal (X), **caractérisé en ce que** la zone de rupture (5) qui relie les deux parties (4a, 4b) de l'enveloppe (4) est dans un plan radial du support (1), et d'épaisseur suffisamment faible pour garantir la rupture en cas de choc.

2. Support selon la revendication 1, **caractérisé en ce que** les deux parties (4a, 4b) de l'enveloppe (4) sont sensiblement cylindriques, coaxiales, la partie (4b) située près du fond étant de diamètre légèrement inférieur à la partie (4a) située près de l'ouverture avant.

3. Support selon l'une quelconque des revendications 1 à 2, **caractérisé en ce que** la zone de rupture (5) présente des nervures radiales (5a) reliant les deux parties (4a, 4b) de l'enveloppe (4), pour garantir la rigidité du support (1) en l'absence de choc.

4. Support selon la revendication 3, **caractérisé en ce que** les nervures (5a) sont réparties de manière régulière sur la périphérie de la zone de rupture (5).

5. Support selon la revendication 1, **caractérisé en ce que** des nervures de compression (7) sont prévues sur le support (1), de façon à mettre en compression une feuille d'étanchéité appliquée sur le support (1) en créant des bourrelets qui empêchent le passage d'eau et de poussières.

6. Support selon l'une quelconque des revendications 1 à 5, **caractérisé en ce qu'**il est prévu un épaulement (6) intermédiaire de l'enveloppe (4), situé entre l'ouverture avant (2) et la zone de rupture (5), de façon à permettre la fixation d'un haut-parleur de diamètre différent.

7. Support selon la revendication 6, **caractérisé en ce que** ledit épaulement (6) permet la fixation d'un haut-parleur (HP1) d'un premier diamètre (D1), tandis que l'ouverture avant permet la fixation d'un haut-parleur (HP2) d'un plus grand diamètre (D2).

8. Support selon la revendication 7, **caractérisé en ce que** les diamètres sont les suivants :
- D1 = 130 mm, et
- D2 = 165 mm.

9. Support selon l'une quelconque des revendications précédentes, **caractérisé en ce que** la zone de rupture (5) présente une épaisseur d'environ 0, 5 mm.

## Claims

1. Supporting member for a vehicle loudspeaker for fitting into a body part, such as a door, which comprises a front opening (2) through which a loudspeaker is introduced, an open-work base (3), and a casing (4) between the front opening (2) and the base (3), the casing (4) having a form generated by revolution in two parts (4a, 4b) along the longitudinal axis (X) of the supporting member (1), the two parts (4a, 4b) of the casing (4) being separated by a rupture zone (5) which makes it possible to absorb at least part of an impact by breaking the supporting member (1) in a telescopic manner along said longitudinal axis (X), **characterised in that** the rupture zone (5) which joins the two parts (4a, 4b) of the casing (4) is in a radial plane of the supporting member (1), and has a sufficiently small thickness to ensure rupture in the event of an impact.

2. Supporting member according to claim 1, **characterised in that** the two parts (4a, 4b) of the casing (4) are substantially cylindrical and coaxial, the part (4b) located near the base having a slightly smaller diameter than the part (4a) located near the front opening.

3. Supporting member according to any of claims 1 or 2, **characterised in that** the rupture zone (5) has radial ribs (5a) joining the two parts (4a, 4b) of the casing (4), to ensure the rigidity of the supporting member (1) in the absence of an impact.

4. Supporting member according to claim 3, **characterised in that** the ribs (5a) are distributed uniformly on the periphery of the rupture zone (5).

5. Supporting member according to claim 1, **characterised in that** compression ribs (7) are provided on the supporting member (1), in such a way as to compress a sealing sheet applied to the supporting member (1) and create enlargements which prevent water and dust from passing through.

6. Supporting member according to any of claims 1 to 5, **characterised in that** the casing (4) is provided with an intermediate shoulder (6) which is located between the front opening (2) and the rupture zone (5) enabling the attachment of a loudspeaker having a different diameter.

7. Supporting member according to claim 6, **characterised in that** said shoulder (6) enables the attachment of a loudspeaker (HP1) having a first diameter (D1), while the front opening enables the attachment of a loudspeaker (HP2) having a larger diameter.

8. Supporting member according to claim 7, **characterised in that** the diameters are as follows:
- D1 = 130 mm, and
- D2=165mm.

9. Supporting member according to any of the above claims, **characterised in that** the rupture zone (5) has a thickness of about 0.5 mm.

## Patentansprüche

1. Halterung für Fahrzeuglautsprecher für den Einbau in einem Karosserieelement, wie beispielsweise eine Tür, mit einer vorderen Öffnung (2), durch die ein Lautsprecher eingeführt wird, einem durchbrochenen Boden (3) und einem Gehäuse (4) zwischen der vorderen Öffnung (2) und dem Boden (3), wobei das Gehäuse (4) entlang der Längsachse (X) der Halterung (1) eine aus zwei Teilen (4a, 4b) bestehende Rotationsgestalt aufweist, wobei die zwei Teile (4a, 4b) des Gehäuses (4) durch einen Sollbruchbereich (5) getrennt sind, der es ermöglicht, zumindest einen Teil eines Aufpralls zu absorbieren, indem die Halterung (1) teleskopartig entlang der Längsachse (X) bricht, **dadurch gekennzeichnet, dass** der Sollbruchbereich (5), der die zwei Teile (4a, 4b) des Gehäuses (4) verbindet, in einer radialen Ebene der Halterung (1) liegt und eine ausreichend geringe Dicke aufweist, um den Bruch bei einem Aufprall sicherzustellen.

2. Halterung nach Anspruch 1, **dadurch gekennzeichnet, dass** die zwei Teile (4a, 4b) des Gehäuses (4) im Wesentlichen zylindrisch und koaxial sind, wobei der Teil (4b), der sich nahe des Bodens befindet, einen geringfügig kleineren Durchmesser aufweist als der Teil (4a), der sich nahe der vorderen Öffnung befindet.

3. Halterung nach einem der Ansprüche 1 bis 2, **dadurch gekennzeichnet, dass** der Sollbruchbereich (5) radiale Rippen (5a) aufweist, welche die zwei Teile (4a, 4b) des Gehäuses (4) verbinden, um die Steifigkeit der Halterung (1) sicherzustellen, wenn kein Aufprall vorliegt.

4. Halterung nach Anspruch 3, **dadurch gekennzeichnet, dass** die Rippen (5a) gleichmäßig über den Umfang des Sollbruchbereichs (5) verteilt sind.

5. Halterung nach Anspruch 1, **dadurch gekennzeichnet, dass** Kompressionsrippen (7) derart auf der Halterung (1) vorgesehen sind, dass eine Dichtungsfolie, die auf der Halterung (1) aufgebracht ist, komprimiert wird, indem Wülste gebildet werden, die den Durchlass von Wasser und Staub verhindern.

6. Halterung nach einem der Ansprüche 1 bis 5, **dadurch gekennzeichnet, dass** ein Zwischenabsatz (6) des Gehäuses (4) , der sich zwischen der vorderen Öffnung (2) und dem Sollbruchbereich (5) befindet, derart vorgesehen ist, dass er die Befestigung eines Lautsprechers mit abweichendem Durchmesser ermöglicht.

7. Halterung nach Anspruch 6, **dadurch gekennzeichnet, dass** der Absatz (6) die Befestigung eines Lautsprechers (LS1) mit einem ersten Durchmesser (D1) ermöglicht, während die vordere Öffnung die Befestigung eines Lautsprechers (LS2) mit einem größeren Durchmesser (D2) ermöglicht.

8. Halterung nach Anspruch 7, **dadurch gekennzeichnet, dass** die Durchmesser folgendermaßen sind:
- D1 = 130 mm und
- D2 = 165 mm.

9. Halterung nach einem der vorangegangenen Ansprüche, **dadurch gekennzeichnet, dass** der Sollbruchbereich (5) eine Dicke von ungefähr 0,5 mm aufweist.
